# EUROPEAN PATENT SPECIFICATION

(11) **EP 0 403 956 B1**
(45) Date of publication and mention of the grant of the patent: **30.08.1995**
(21) Application number: 90111228.4
(22) Date of filing: 13.06.1990
(51) Int. Cl.: B65G 57/30, B65B 35/52

(54) **Stacking and forwarding apparatus**
Apparat zum Stapeln und Fördern
Appareil pour empiler et pour convoyer

(30) Priority: 17.06.1989 JP 155185/89
(43) Date of publication of application: 27.12.1990
(73) Proprietor: SANJO MACHINE WORKS, Ltd., Minami-Kanbara-gun, Niigata-ken (JP); JAPAN TOBACCO INC., Tokyo 105 (JP)
(72) Inventor: Aida, Satoru, Sanjo-shi, Niigata-ken (JP); Soyama, Hideo, Nishikanbara-gun, Niigata-ken (JP); Kawabata, Mitsuaki, Kita-ku, Tokyo (JP); Yokoyama, Masashi, Kita-ku, Tokyo (JP)
(74) Representative: Popp, Eugen, Dr.

(56) References cited:
- EP-A- 0 168 548
- DE-A- 2 206 437
- DE-A- 2 502 129
- GB-A- 931 918
- US-A- 3 250 376

## Description

This invention relates to a stacking and forwarding apparatus for stacking works supplied one after another and forwarding them, and more particularly, to a packing machine adapted to pack works, such as cigarette packs, into one box, such that the works are arranged in two rows, stacked one on the other, each consisting of 5 works.

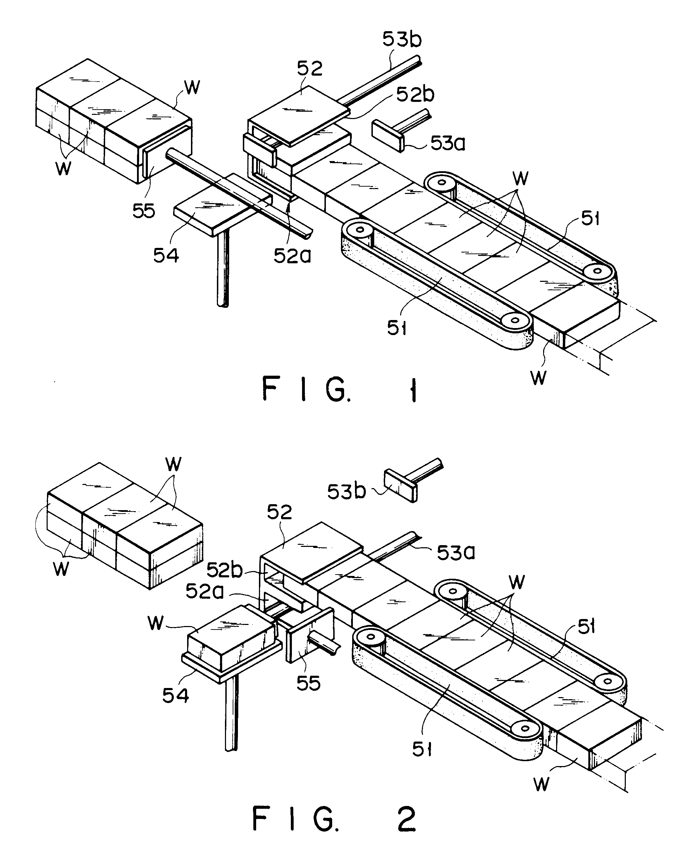

A conventional apparatus of this kind is disclosed in Published Unexamined Japanese Patent Application No. 62-126035. In this apparatus, two parallel belts 51 transfers works W, such as cigarette packs, one by one into a divided section 52, as shown in Figs. 1 through 3. The section 52 is provided with a lower receiving portion 52a and an upper receiving portion 52b. After the first work W is transported into the lower receiving portion 52a, as shown in Fig. 1, the divided section 52 moves downward, whereby the second work W is guided into the upper receiving portion 52b, and simultaneously, the first work is pushed from the lower receiving portion 52b into a stacking section 54 by a pushing member 53a, as shown in Fig. 2. Then, as is shown in Fig. 3, the divided section 52 and the stacking section 54 move upward, whereby the second work is pushed from the upper receiving portion 52b by a pushing member 53b located above the pushing member 53a, onto the first work located on the stacking section 54, and at the same time the third work W is received in the lower receiving portion 52a. The first and second works W stacked on the stacking member 54 are pushed out by a send-out member 55, as shown in Fig. 1. Thus, the works W supplied one by one on a continuous basis are forwarded in a stacked state.

In the conventional apparatus, to stack the works, the divided section 52 is moved up and down, and the pushing members 53a and 53b are moved back and forth. Consequently, the stacking operation cannot be performed at high speed. In particular, the reciprocation of the divided section 52 makes high-speed stacking difficult.

A known apparatus for raising packages in conjunction with a packaging machine is also disclosed in DE-A 22 06 437. The apparatus is intended to form groups of packages, the groups formed of several packages lying adjacent to one another. At least one package hoist is provided to engage the underside of the received packages and when raising them, supplying them from below to a partial group of packages already formed.

The German application DE-A-20 21 091 discloses a feeding apparatus supplying bottle caps to a bottle capping machine. Three rotary separator elements having a screw-shaped outer surface are provided for separating the undermost cover or cap from a stack of vertical caps supplied to the machine. After separation, the cap is guided downwardly along the screw-shaped grooves of the separators to be fixed to a bottle.

An object of the invention is to provide an apparatus which can stack successively supplied works and forward the stacked works at high speed.

According to the present invention, an apparatus for stacking and forwarding works is provided as defined in claim 1. A use of the apparatus for stacking and forwarding packs of cigarettes is also provided as defined in claim 6. The apparatus comprises transporting means for transporting the works in a first direction on a continuous basis, where interrupting means are provided for interrupting the transport of the works in the first direction. Guide means are provided for guiding a work form the interrupting means in a second direction different from the first direction and allowing the next work to be transported into said interrupting means thereby stacking the guided work on the received work and thereby guiding the stacked works in said second direction. In addition the apparatus comprises forwarding means for forwarding at least two stacked works. The guide means comprise a cam mechanism including cams having screw-shaped outer cam surfaces, the rotation of which provides contact with and movement of the work in the second direction.

This invention can be more fully understood from the following detailed description when taken in conjunction with the accompanying drawings, in which:
Figs. 1 to 3 are perspective views of a conventional stacking and forwarding apparatus, useful in explaining the operation thereof to stack and transport works supplied on a continuous basis;
Fig. 4 is a schematic plan view of a stacking and forwarding apparatus of one embodiment of the invention for stacking and forwarding works supplied on a continuous basis;
Fig. 5 is a sectional side view of the apparatus shown in Fig. 4;
Fig. 6 is a plan view, showing the operation of the apparatus shown in Fig.4;
Fig. 7 is a sectional side view of the apparatus shown in Fig. 6;
Fig. 8 is a plan view, showing another operation of the apparatus shown in Fig. 4;
Fig. 9 is a sectional side view of the apparatus shown in Fig. 8;
Fig. 10 is a perspective view of a cam for stacking and forwarding works, which is employed in the apparatus shown in Fig. 4;
Fig. 11 is a plan view of the cam shown in Fig. 10;
Fig. 12 is a side view of the cam shown in Fig. 10; and
Fig. 13 is a development of the peripheral surface of the cam shown in Fig. 10.

Figs. 4 to 9 show a packing apparatus according to one embodiment of the invention, which packs works, for example, cigarette packs, into boxes, such that the works are arranged, in each box, in two rows stacked one on the other, each consisting of 5 works. In Fig. 4, the symbol W designates a work or article, i.e. a cigarette pack in the embodiment. The works W are continuously transported on a rail 2 from a cigarette-pack manufacturing-device, with the opposite shorter sides of the pack held between two parallel belts 1. Thus, the works W are supplied, on a continuous basis, to a receiving section 3, which comprises stoppers 3a to be brought into contact with the front surface of the work W, and guide members 3b to be brought into contact with the opposite shorter sides of the work W. Thus, the work W is placed by the stoppers 3a and guide members 3b in a proper location wherein the work W is capable of being lifted.

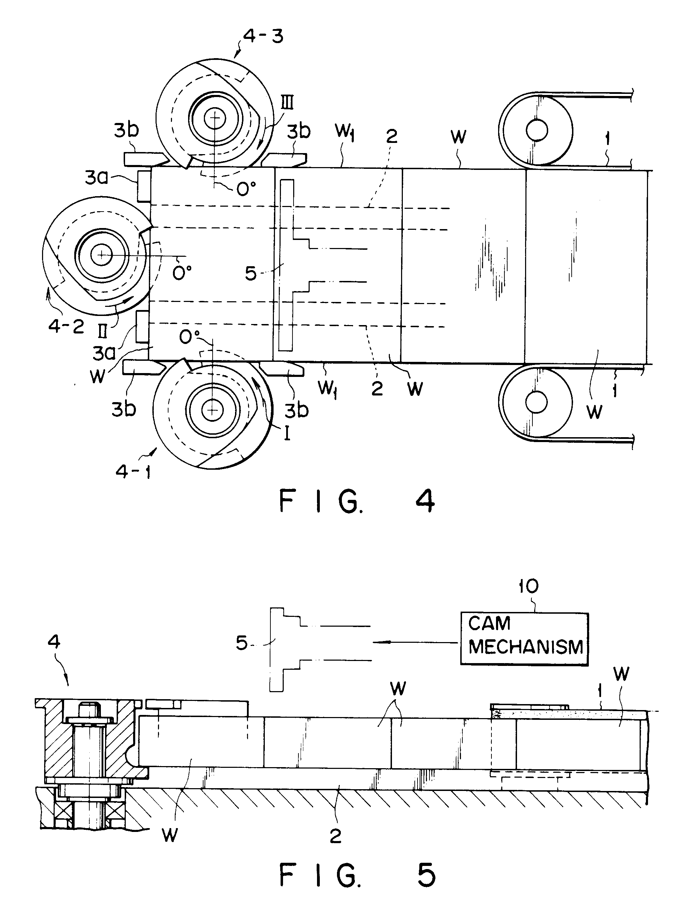

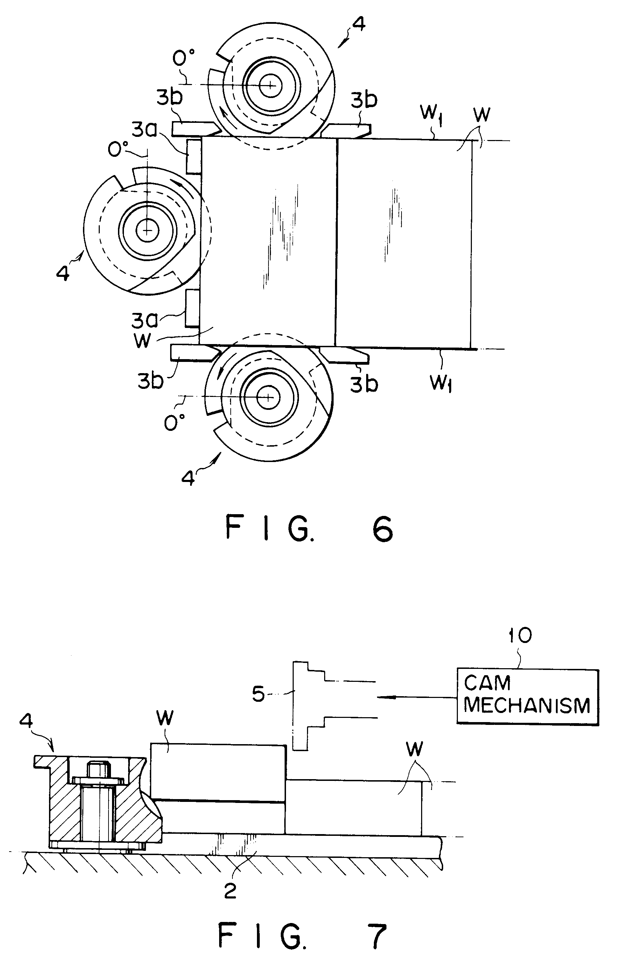

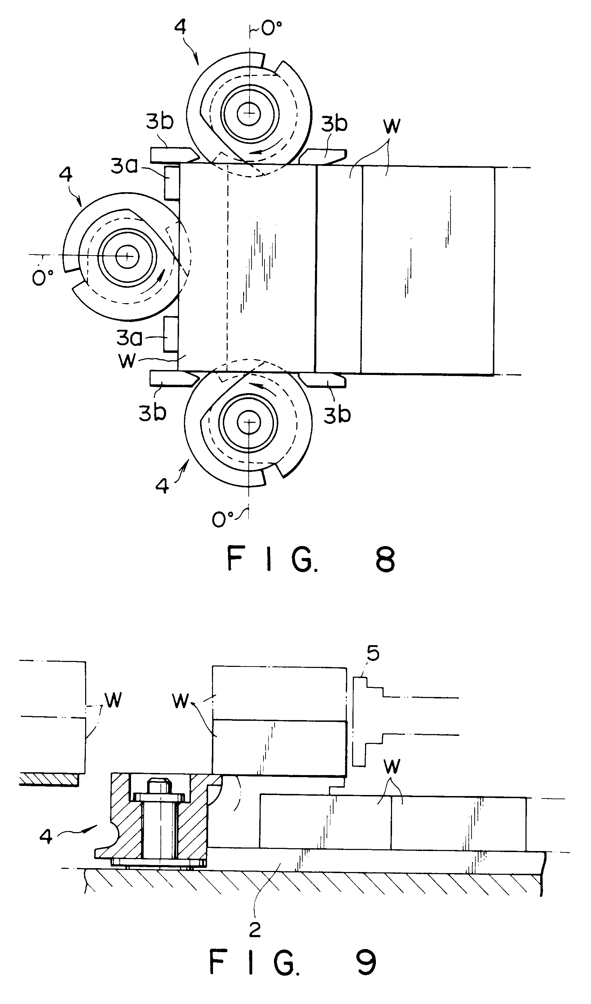

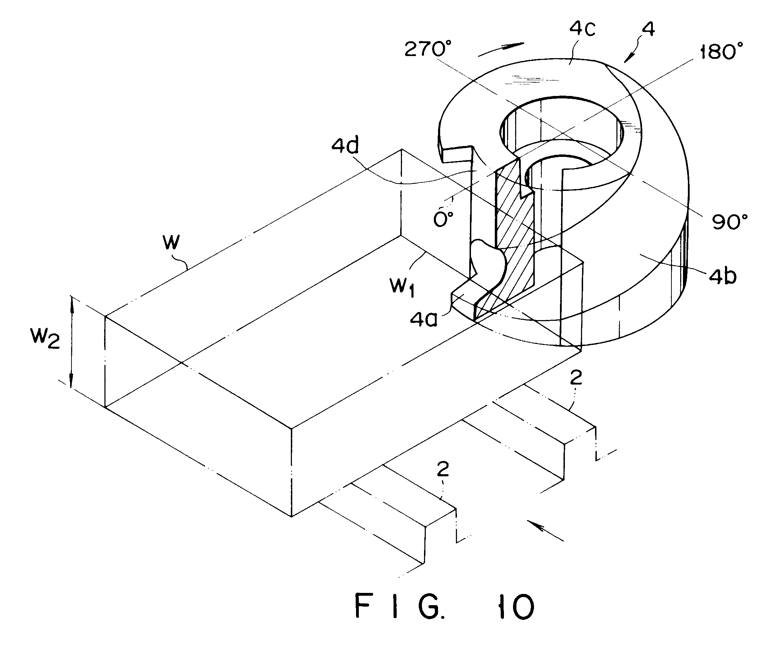

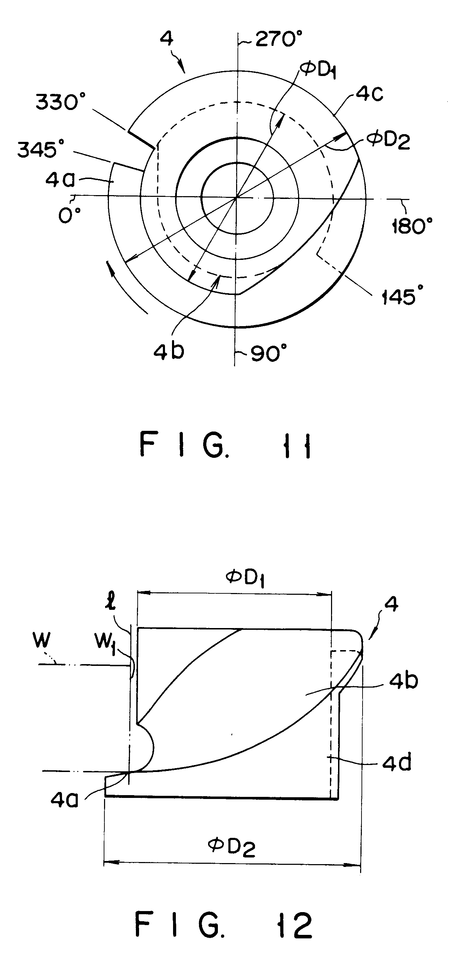

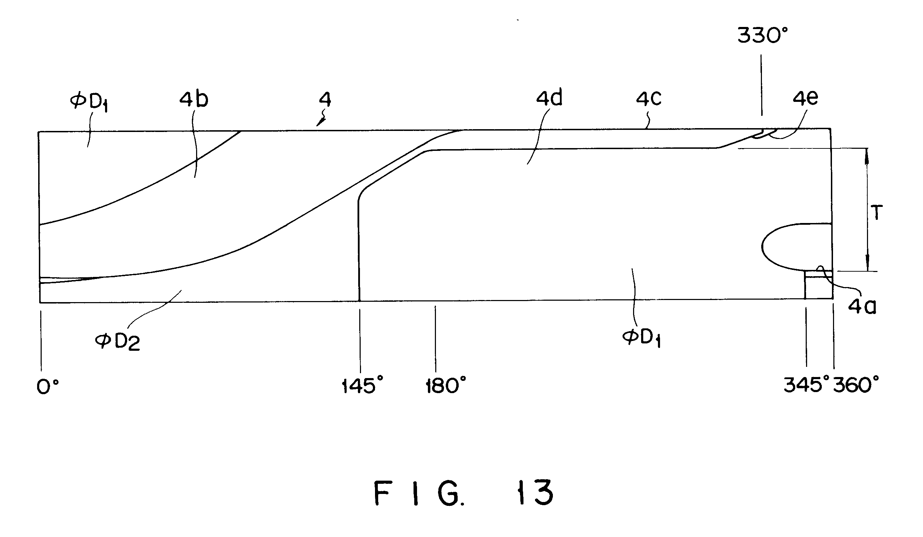

As is shown in Figs. 10 to 13, stacking cams 4-1, 4-2 and 4-3 are arranged respectively opposed to the front side and opposite shorter sides of the work W, and can rotate in synchronism with each other in the directions indicated by the arrows I, II and III shown in Fig. 4. More speficically, the first and second cams 4-1 and 4-2 have the same shape, and can rotate in the same direction I and II, while the third cam 4-3 has a shape symmetrical to that of the cams 4-1 and 4-2, and can rotate in the opposite direction. As is shown in Figs. 10-13, each cam 4 comprises a base portion defined by a basic diameter D1, and a peripheral portion obtained by removing the base portion from the entire body defined by a reference diameter D2, and is arranged such that the base portion does not contact the work W, and the peripheral portion can contact the bottom surface of the work W. The peripheral portion is provided with a stage 4a, a cam surface 4b, a stacking portion 4c having an upper surface and a lower surface, and a slanting surface 4e, while the base portion is provided with a relief surface 4d. The stage 4a is formed over the rotational angle from 345° (-15°) to 0° (360°), and has a level equal to or slightly lower than the bottom level of the work W, which is defined by the height of the rail 2, shown in Fig. 10. As is shown in Fig. 12, the cam surface 4b is screw-shaped like a groove over the rotational angle from 0° to 180°, and has a height increased from one end to the other end for pushing up the work W. The stacking surface or upper cam surface of the stacking portion 4c is formed over the rotational angle from 180° to 330° (-30°), and has the same height over its entire surface. Over the rotational angle from 145° to 330°, the relief surface 4d is formed, which has a height T larger than the thickness W₂ of the work W, and the slanting surface 4e is formed under the stacking portion 4c, for preventing the interference between the upper surface of the work W and the lower surface of the stacking portion 4c.

A pushing rod 5 for pushing the works W is arranged above the works W transported on the rail 2 on a continuous basis, and is reciprocated by a cam mechanism 10 in synchronism with the rotation of the cam 4.

When the work W, transported on the rail 2 with the opposite shorter sides held between the belts 1, reaches the area where the belts 1 are not provided, it is pushed by the succeeding works W into the receiving section 3, and then slides on the cam surface 4b of the cam 4 in accordance with the rotation of the same, thus being moved upward to be stacked, as is shown in Fig. 7. While the cam rotates through 360°, the work W slides on the upper surface 4c of the cam 4. The speed of the supply of the works W is adjusted to synchronize with the rotation of the cam, such that the next work W is surely received in the receiving section 3, positioned below the first work W, and then has the first work W stacked thereon.

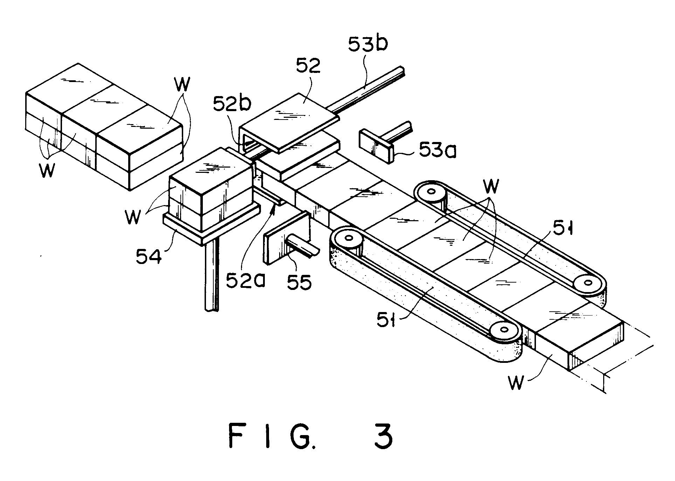

In the above-described stacking and forwarding apparatus, the first work W is received in the receiving section 3 when the rotational angle of the cam 4 is 0 degree, as is shown in Figs. 4 and 5. In accordance with the rotation of the three cams 4, the first work W contacts the cam surface 4b of each cam 4, to thereby be moved upward, and is placed on the stacking surface 4c when the rotational angle of the cam reaches 180°. The next work W can enter the receiving section 3 by virtue of the relief surface 4d. When the rotational angle of the cam becomes 0°, the lower surface of the stacking portion 4c is separated from the first work W, and therefore, the first work W falls, by its own weight, onto the second work W already received in the receiving section 3. The second work W also contacts the cam surfaces 4b of the three cams, and moves upward, with the first work W stacked thereon. As is shown in Figs. 8 and 9, the stacked works W are placed on the stacking surface 4c at a rotational angle of 270°, and pushed by the pushing rod 5 while the cam moves from 180° to 360°, thus being transported outside the apparatus. The third and fourth works W are stacked and transported in a similar manner to the first and second works W. Thus, two works can be stacked by two revolutions of the cam. Since the stacking and forwarding apparatus employs the cams 4 which directly transports the works W in a stacking direction and stacks them, the stacking operation can be hastened.

Although in the above embodiment, works W are supplied one by one, and the works of each pair is stacked one on the other, the invention is not limited to this. To stack the works W on n-levels, the apparatus can be modified such that the works are pushed by the pushing rod 5 after the cams 4 rotate n times. Further, to stack the works, supplied on two-levels, on four-levels, the configuration of the cam 4 can be made such that the works stacked on two-levels can be stacked with further works thereon. In this way, a desired stacking can be performed. Also, in the embodiment, the stacking portion 4c is formed so that it is brought out of contact with the work W at a rotational angle of 0°, and hence the work W falls at this angle, by its own weight, onto the next work W, whereby the two works can move upward together. This structure can be replaced with another. For example, if the stacking portion 4c is lengthened to a maximum, but keeping the upper surface of the work W off the lower surface of the stacking portion 4c, the work W can be prevented from falling down by its weight. Alternatively, the fall of the work due to its own weight can be prevented by applying a frictional force to the opposite sides of the work W when the work W is raised. Moreover, instead of the stacking surface 4c of the cam 4, any similar mechanism can be employed in the apparatus.

Moreover, although a cylindrical cam having a cam surface formed on the periphery thereof is used as the stacking cam 4 in the embodiment, another cam can be used, which has opposite ends provided with cam surfaces, respectively, or has another configuration. That is, what is essential is to employ a cam which can directly contact works and transport them in the stacking direction.

As is described above, the present invention employs a stacking cam capable of directly transporting works in a stacking direction and stacking them, which can hasten the stacking operation. Further according to the invention, the apparatus is used for stacking and forwarding packs of cigarettes, an operation for which stacking speed is important.

## Claims

1. An apparatus for stacking and forwarding works (W) comprising:
transporting means (1, 2) for transporting the works (W) in a first direction on a continuous basis;
interrupting means (3a, 3b) for interrupting the transport of the works (W) in the first direction;
guide means (4) for guiding a work from the interrupting means (3a, 3b) in a second direction different from the first direction, and allowing the next work (W) to be transported into said interrupting means (3a, 3b), thereby stacking the guided work (W) on the received work (W), and guiding the stacked works (W) in said second direction;
forwarding means (5, 10) for forwarding at least two stacked works;
**characterized in that**
said guide means (4) comprises a cam mechanism (4) including cams having screw-shaped surfaces (4b), the rotation of which provides contact with and movement of the work (W) in said second direction.

2. The apparatus according to claim 1, characterized in that the cam mechanism (4) includes first, second and third cams (4) arranged on three sides of said work, said cams being driven to rotate in synchronism with each other.

3. The apparatus according to claim 1 or 2, characterized in that the cam mechanism (4) includes a first cam surface (4b) to be brought into contact with the work (W) received in the interrupting means (3a, 3b), the first cam surface having a height varying in accordance with the rotation of the cam (4), where the work (W) contacts and slides on the cam surface to provide movement in said second direction.

4. The apparatus according to claim 3, characterized in that the cam (4) has a second cam surface (4d) for allowing the work (W) to be transported into the interrupting means (3a, 3b), and holding the work (W) to be guided in position, the second cam surface (4d) extending continuously from the first cam surface (4b).

5. The apparatus according to claim 4, characterized in that the cam (4) has a cutout portion for placing the work (W) having been moved in said second direction onto the next work (W) received in the interrupting means.

6. Use of the apparatus of one of the preceding claims for stacking and forwarding packs of cigarettes.

## Patentansprüche

1. Vorrichtung zum Stapeln und Fördern von Werkstücken (W), die folgendes aufweist:
Transporteinrichtungen (1, 2), um die Werkstücke (W) in einer ersten Richtung auf einer kontinuierlichen Basis zu transportieren;
eine Unterbrechungseinrichtung (3a, 3b), um den Transport der Werkstücke (W) in der ersten Richtung zu unterbrechen;
eine Führungseinrichtung (4), um ein Werkstück von der Unterbrechungseinrichtung (3a, 3b) in einer zweiten Richtung, die von der ersten Richtung verschieden ist, zu führen und um zuzulassen, daß das nächste Werkstück (W) in die Unterbrechungseinrichtung (3a, 3b) transportiert wird, so daß das geführte Werkstück (W) auf dem aufgenommenen Werkstück (W) gestapelt wird und die gestapelten Werkstücke (W) in der zweiten Richtung geführt werden;
Fördereinrichtungen (5, 10), um mindestens zwei gestapelte Werkstücke zu fördern;
**dadurch gekennzeichnet, daß**
die Führungseinrichtung (4) einen Nockenmechanismus (4) aufweist, der Nocken mit schraubenförmigen Oberflächen (4b) hat, deren Drehung eine Berührung mit dem Werkstück (W) und eine Bewegung desselben in der zweiten Richtung bewirkt.

2. Vorrichtung nach Anspruch 1, dadurch gekennzeichnet, daß der Nockenmechanismus (4) einen ersten, zweiten und dritten Nocken (4) aufweist, die an drei Seiten des Werkstücks angeordnet sind, wobei die Nocken angetrieben werden, um synchron miteinander zu drehen.

3. Vorrichtung nach Anspruch 1 oder 2, dadurch gekennzeichnet, daß der Nockenmechanismus (4) eine erste Nockenfläche (4b) aufweist, die mit dem Werkstück (W), das in der Unterbrechungseinrichtung (3a, 3b) aufgenommen ist, in Berührung zu bringen ist, wobei die erste Nockenfläche eine Höhe hat, die sich in Abhängigkeit von der Drehung des Nockens (4) ändert, wobei das Werkstück (W) die Nockenfläche berührt und daran gleitet, um eine Bewegung in der zweiten Richtung zu bewirken.

4. Vorrichtung nach Anspruch 3, dadurch gekennzeichnet, daß der Nocken (4) eine zweite Nockenfläche (4d) hat, um zuzulassen, daß das Werkstück (W) in die Unterbrechungseinrichtung (3a, 3b) transportiert wird, und zum Halten des Werkstücks (W), um in seine Position geführt zu werden, wobei die zweite Nockenfläche (4d) kontinuierlich von der ersten Nockenfläche (4b) ausgeht.

5. Vorrichtung nach Anspruch 4, dadurch gekennzeichnet, daß der Nocken (4) einen ausgeschnittenen Bereich hat, um das Werkstück (W), das in der zweiten Richtung bewegt worden ist, auf dem in der Unterbrechungseinrichtung aufgenommenen, nächsten Werkstück (W) abzulegen.

6. Verwendung der Vorrichtung nach einem der vorhergehenden Ansprüche zum Stapeln und Fördern von Zigarettenpackungen.

## Revendications

1. Appareil pour empiler et faire avancer des pièces (W) comprenant :
des moyens de transport (1, 2) pour transporter les pièces (W) dans une première direction sur une base continue ;
des moyens d'interruption (3a, 3b) pour interrompre le transport des pièces (W) dans la première direction ;
des moyens de guidage (4) pour guider une pièce depuis les moyens d'interruption (3a, 3b) dans une seconde direction différente de la première direction, et permettre à la pièce suivante (W) d'être transportée dans lesdits moyens d'interruption (3a, 3b), empilant ainsi la pièce (W) guidée sur la pièce (W) reçue, et guidant les pièces empilées (W) dans ladite seconde direction ;
des moyens d'avance (5, 10) pour faire avancer au moins deux pièces empilées ;
caractérisé en ce que
lesdits moyens de guidage (4) comprennent un mécanisme à cames (4) comportant des cames ayant des surfaces en forme de vis (4b), dont la rotation procure un contact avec et un mouvement de la pièce (W) dans ladite seconde direction.

2. Appareil selon la revendication 1, caractérisé en ce que le mécanisme à cames comporte des première, seconde et troisième cames (4) agencées sur trois côtés de ladite pièce, lesdites cames étant entraînées de façon à tourner en synchronisme les unes avec les autres.

3. Appareil selon l'une des revendications 1 et 2, caractérisé en ce que le mécanisme à camp (4) comporte une première surface de came (4b) destinée à venir en contact avec la pièce (W) reçue dans les moyens d'interruption (3a, 3b), la première surface de came ayant une hauteur qui varie selon la rotation de la came (8), où la pièce (W) vient en contact avec et glisse sur la surface de came pour procurer un mouvement dans ladite seconde direction.

4. Appareil selon la revendication 3, caractérisé en ce que la came présente une seconde surface de came (4d) pour permettre à la pièce (W) d'être transportée à l'intérieur des moyens d'interruption (3a, 3b), et maintenir la pièce (W) pour la guider en position, la seconde surface de came s'étendant de façon continue à partir de la première surface de came (4b).

5. Appareil selon la revendication 4, caractérisé en ce que la came (4) présente une portion évidée pour placer la pièce (W) qui a été déplacée dans ladite seconde direction sur la pièce suivante (W) reçue dans les moyens d'interruption.

6. Utilisation de l'appareil selon l'une des revendications précédentes pour empiler et faire avancer des paquets de cigarettes.
